# EUROPEAN PATENT APPLICATION

(11) **EP 3 567 298 A1**
(43) Date of publication of application: **13.11.2019**
(21) Application number: 19172619.9
(22) Date of filing: 03.05.2019
(51) Int. Cl.: F16M 11/18, F16M 11/20, F16M 11/04, G08B 13/196, G06F 3/033, H04N 5/232, G01S 3/786, G01S 3/807

(54) **SYSTEM AND METHOD OF TRACKING AN OBJECT**

(30) Priority: 04.05.2018 US 201862666852 P
(71) Applicant: TTI (Macao Commercial Offshore) Limited, Macao (MO)
(72) Inventor: Hanks, Nicolas J., Pendleton, SC 29670 (US)
(74) Representative: Carty-Hornsby, Gregory James

(57) **Abstract**

An object tracking system including a base, a platform rotatably coupled to the base via an actuator, a sensor, and a controller having a memory and an electronic processor. The platform is configured to receive an accessory device. The sensor is configured to sense movement of the object. The controller is configured to receive, via the sensor, data indicative of movement of the object, and control the actuator based on the data indicative of movement of the object.

## Description

### FIELD OF THE INVENTION

Embodiments relate to tracking one or more objects using a sensor (for example, a camera).

### SUMMARY OF THE INVENTION

A first aspect of the invention provides an object tracking system including a base, a platform rotatably coupled to the base via an actuator, a sensor, and a controller having a memory and an electronic processor. The platform is configured to receive an accessory device. The sensor is configured to sense movement of the object. The controller is configured to receive, via the sensor, data indicative of movement of the object, and control the actuator based on the data indicative of movement of the object.

The accessory device may be at least one selected from a group consisting of a light source, a fan, a camera, a smartphone, a tablet, an accessory device removably received by the platform.

The base may further include a battery receptacle configured to receive a rechargeable battery pack.

The actuator may receive power from the rechargeable battery pack. Additionally or alternatively, the accessory device may receive power from the rechargeable battery pack.

The controller may be further configured to determine if movement of the object is valid, and control the actuator based on a determination that movement of the object is valid. Additionally or alternatively, the controller may be further configured to receive, via the sensor, data indicative of movement of a second object.

The controller may be further configured to determine, based on the data indicative of movement of the object and data indicative of movement of the second object, a weighted location between the object and second object; and control the actuator in a direction toward the weighted location.

The weighted location may be determined at least partially based on at least one selected from a group consisting of: (a) a first size of the object and a second size of the second object, (b) a first distance of the object from the base and a second distance of the second object from the base, (c) a first frequency of motion of the object and a second frequency of motion of the second object, (d) a first distance of motion of the object and a second distance of motion of the second object, and (c) a first speed of motion of the object and a second speed of motion of the second object.

A second aspect of the invention provides a method of operating an object tracking apparatus. The object tracking apparatus includes a base and a platform rotatably coupled to the base via an actuator. The method includes sensing, via a sensor, a first image of an object at a first time, and sensing, via the sensor, a second image of the object at a second time. The method further includes receiving, via a controller, the first image and the second image, determining, via the controller, a delta between the first image and the second image, and determining, via the controller, motion of the object based on the delta. The method further includes determining, via the controller, if the motion of the object is valid, determining, via the controller, a position of the object based on the motion when the motion is valid, and controlling, via the controller, the actuator to move the platform in a direction of the position.

The method may further comprise: receiving, via the platform, an accessory device.

The accessory device may be at least one selected from a group consisting of: (a) a light source, (b) a fan, (c) a camera, (d) a smartphone, and (e) a tablet.

The method may further comprise: receiving, via a battery receptacle of the base, a rechargeable battery pack.

The actuator may receive power from the rechargeable battery pack. Additionally or alternatively, an accessory device releasably coupled to the platform may receive power from the rechargeable battery pack.

The method may further comprise: sensing, via the sensor, a third image of a second object at the first time; sensing, via the sensor, a fourth image of the second object at the second time; receiving, via the controller, the third image and the fourth image; determining, via the controller, a second delta between the third image and the fourth image; determining, via the controller, a second motion of the second object based on the second delta; determining, via the controller, if the second motion of the object is valid; determining, via the controller, a second position of the second object based on the second motion when the second motion is valid; determining, via the controller, a weighted location based on the position and the second position; and controlling, via the controller, the actuator to move the platform in a direction of the weight position.

The weighted location may be determined at least partially based on at least one selected from a group consisting of: (a) a first size of the object and a second size of the second object, (b) a first distance of the object from the base and a second distance of the second object from the base, (c) a first frequency of motion of the object and a second frequency of motion of the second object, (d) a first distance of motion of the object and a second distance of motion of the second object, and (e) a first speed of motion of the object and a second speed of motion of the second object.

The step of determining, via the controller, if the motion of the object is valid may include comparing a first area of the object in the first image to a second area of the object in the second image. Additionally or alternatively, the step of determining, via the controller, if the motion of the object is valid may include comparing a first location of the object in the first image to a second location of the object in the second image.

Further aspects of the invention are set forth in the appended claims, or will become apparent by consideration of the detailed description and accompanying drawings.

### BRIEF DESCRIPTION OF THE DRAWINGS

FIG. 1 is a perspective view of an object tracking system according to some embodiments.
FIG. 2 is a partially transparent perspective view of the object tracking system of FIG. 1 according to some embodiments.
FIG. 3 is a rear view of the object tracking system of FIG. 1 according to some embodiments.
FIG. 4 is a block diagram illustrating a control system of the object tracking system of FIG. 1 according to some embodiments.
FIGS. 5A & 5B illustrate the object tracking system of FIG. 1 tracking an object according to some embodiments.
FIG. 6 is a flowchart illustrating an operation of the object tracking system of FIG. 1 according to some embodiments.
FIG. 7 illustrates the object tracking system of FIG. 1 tracking two or more objects according to some embodiments.
FIG. 8 is a flowchart illustrating an operation of the object tracking system of FIG. 1 according to some embodiments.

### DETAILED DESCRIPTION

Before any embodiments of the application are explained in detail, it is to be understood that the application is not limited in its application to the details of construction and the arrangement of components set forth in the following description or illustrated in the following drawings. The application is capable of other embodiments and of being practiced or of being carried out in various ways.

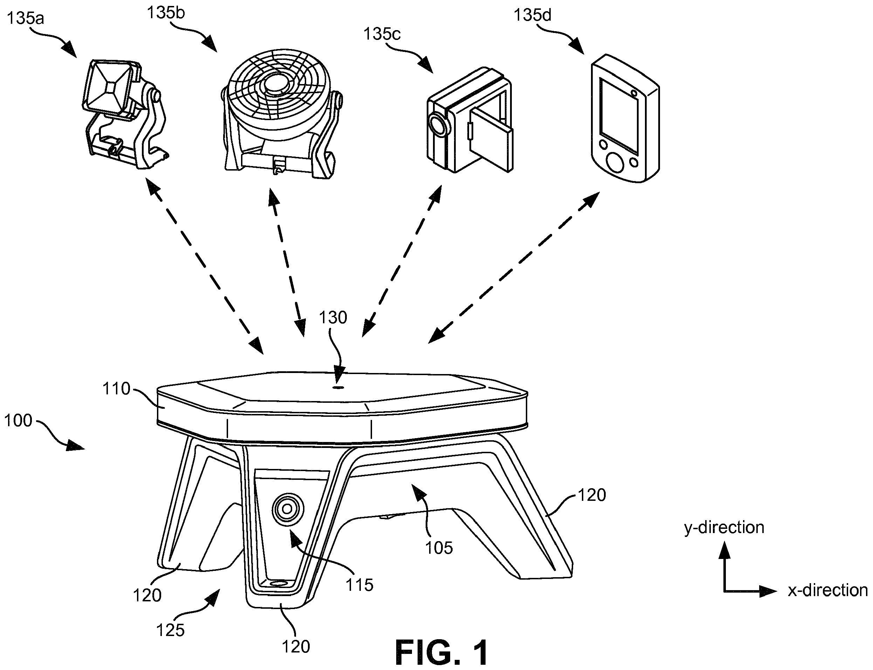

FIG. 1 illustrates an object tracking system 100 according to some embodiments. The system 100 includes a base 105, a platform 110, and a sensor 115. In the illustrated embodiment, the base 105 may include one or more supports 120, such as legs, configured to elevate the system 100 above a surface 125, which may be, for example, a floor, a table, etc. The platform 110 is rotatably coupled to the base 105. In some embodiments, the platform is rotatable in an x-direction. In other embodiments, the platform 110 is movable in an x-direction, as well as a y-direction. In the illustrated embodiment, the platform 110 includes an accessory coupler 130. The accessory coupler 130 is configured to couple an accessory 135 (for example, a light source (such as, a flashlight) 135a, a fan 135b, a camera, 135c, a smartphone/tablet 135d, etc.) to the platform 110. In other embodiments, the system 100 may be incorporated into the accessory 135. For example, a ceiling light and/or fan fixture having the system 100 incorporated therein.

As discussed in more detail below, the sensor 115 is configured to sense one or more objects (for example, a human). In some embodiments, the sensor 115 includes one or more cameras or other sensors. In the illustrated embodiment, the sensor 115 is located within a support 120 of the base 105. However, in other embodiments, the sensor 115 may be located in other areas of the base 105 or other areas of the system 100. Additionally, in some embodiments, one or more sensors may be located at multiple points of the system 100 (for example, a first sensor located within the base 105, a second sensor located within the platform 110, and/or a third sensor located externally from a housing of the system 100).

In general operation, as the one or more objects move, the sensor 115 senses the movement of the object, including a current object location. In response, the platform 110, and thus the accessory 135 coupled to the platform 110 via the accessory coupler 130, moves to direct the accessory 135 toward the current object location.

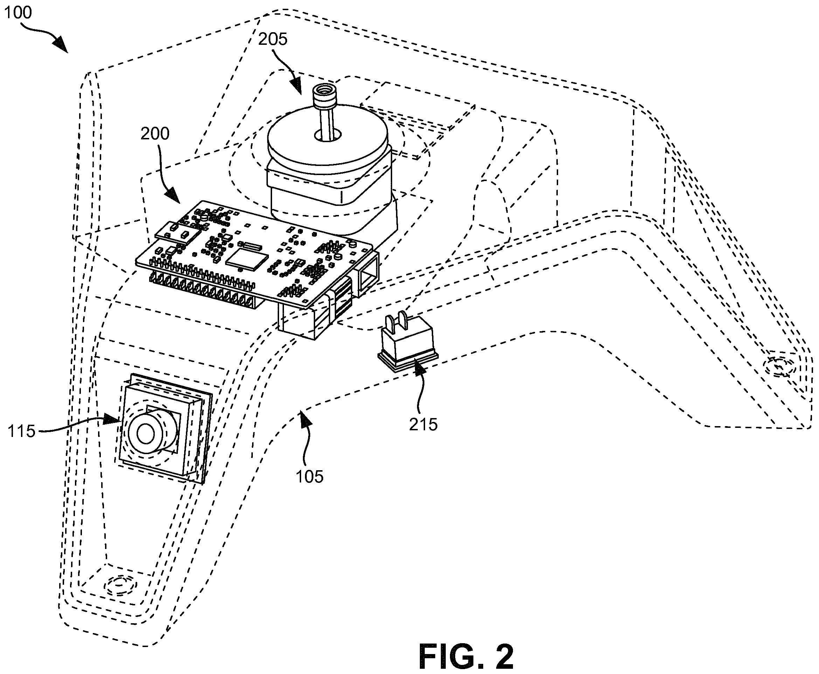

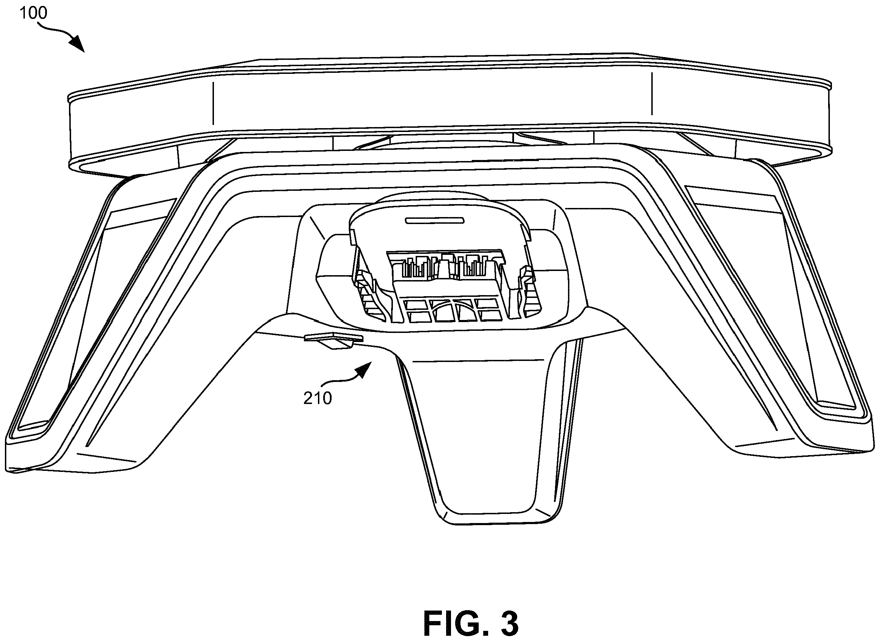

FIG. 2 illustrates the object tracking system 100 with the platform 110 removed and the base 105 transparent for illustrative purposes. In the illustrated embodiment, the system 100 further includes a printed-circuit board 200, an actuator 205, a battery receptacle 210 (FIG. 3), and a switch 215.

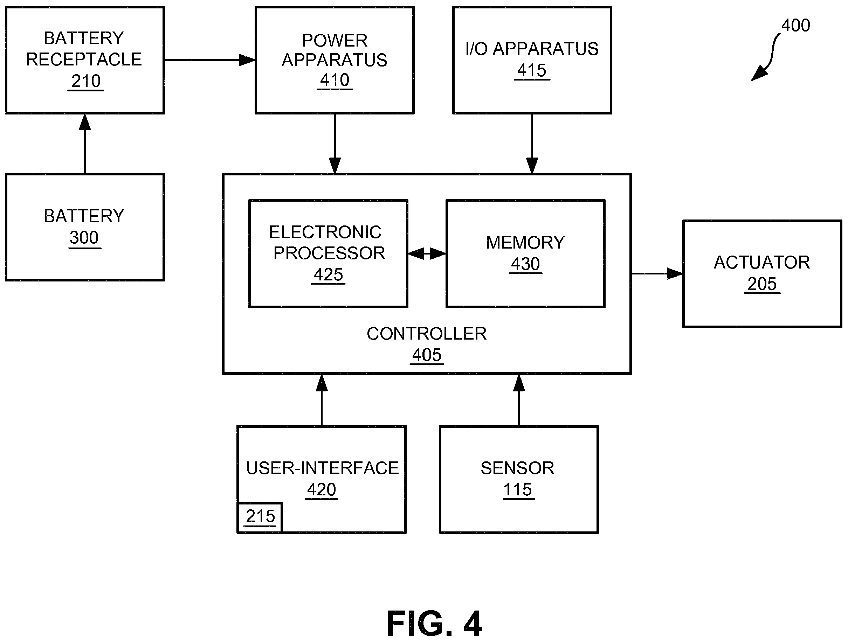

The printed-circuit board 200 may include control circuitry (such as, but not limited to, control system 400 of FIG. 4) configured to provide operational control of the system 100. The printed-circuit board 200 may be electrically and/or communicatively coupled to the sensor 115, the actuator 205, the battery receptacle 210 and the switch 215.

The actuator 205 may be any actuator that applies a force. The actuator 205 may be a motor configured to provide a rotational force in the x-direction, but is not limited to one or more of the following: an alternating-current motor, an alternating-current synchronous motor, an alternating-current induction motor, a direct-current motor, a commutator direct-current motor (for example, permanent-magnet direct-current motors, wound field direct-current motors, etc.), a reluctance motor (for example, switched reluctance motors), and a hydraulic motor. In some embodiments, the actuator 205 may be configured to provide rotational force in the x-direction, as well as rotational force in the y-direction.

FIG. 3 is a rear view of the system 100 according to some embodiments. As illustrated, the system 100 includes the battery receptacle 210. The battery receptacle 210 is configured to receive a battery 300 (FIG. 4). In some embodiments, the battery 300 is a battery pack (for example, a power tool battery pack providing approximately 18 volts direct-current (DC) power). In some embodiment, the battery 300 includes one or more battery cells. In such an embodiment, the battery cells may be rechargeable cells having a lithiumion chemistry. The battery 300 may provide power to the system 100, via the battery receptacle 210.

In some embodiments, the system 100 includes a second power supply (for example, an alternating-current (AC) power supply). In such an embodiment, the second power supply may be in addition to, or in lieu of, the battery receptacle 210 and battery 300. For example, in an embodiment in which the system 100 is incorporated into a ceiling light and/or fan assembly, the system 100 may be powered from an AC power supply (for example, a mains voltage).

In some embodiments, the system 100 includes a battery charger configured to charge battery 300. In such an embodiment, the second power supply supplies power to the battery charger to charge battery 300. When a second power supply source (for example, an AC source), is not available (for example, at jobsites, campsites, etc.), the system 100 may be powered by battery 300. In some embodiments, such as but not limited to embodiments in which system 100 is incorporated into a ceiling light and/or fan assembly, the second power supply may be the main power supply, while battery 300 may be used as a battery backup. In such an embodiment, the main power supply may provide power to a battery charger to charge battery 300.

FIG. 4 is a block diagram of a control system 400 of the system 100 according to some embodiments. In some embodiments, the control system 400 is contained, partially or completely, on or within the printed-circuit board 200. The control system 400 includes a controller 405, a power supply apparatus 410, an input/output (I/O) apparatus 415, and a user-interface 420.

The controller 405 includes an electronic processor 425 and memory 430. The memory 430 stores instructions executable by the electronic processor 425. In some instances, the controller 405 includes one or more of a microprocessor, digital signal processor (DSP), field programmable gate array (FPGA), application specific integrated circuit (ASIC), or the like. The control system 400, via the controller 405, is electrically and/or communicatively coupled to the sensor 115, the actuator 205, the battery receptacle 210, and the switch 215.

The power supply apparatus 410 receives power and outputs a nominal power to the controller 405. In the illustrated embodiment, the power supply apparatus 410 receives power from the battery 300 via the battery receptacle 210. As discussed above, in other embodiments, the power supply apparatus 410 may receive power from the second power supply. The I/O apparatus 415 provides wired and/or wireless communication between controller 405 and an external device (for example, a smartphone, a tablet, an external computer, etc.).

The user-interface 420 provides information to, and/or receives input from, a user. The user-interface 420 may include one or more of the following: switch 215; a display (for example, a liquid crystal display (LCD)); one or more light emitting diodes (LEDs) or other illumination devices; speakers for audible feedback (for example, beeps, spoken messages, etc.); or other feedback devices.

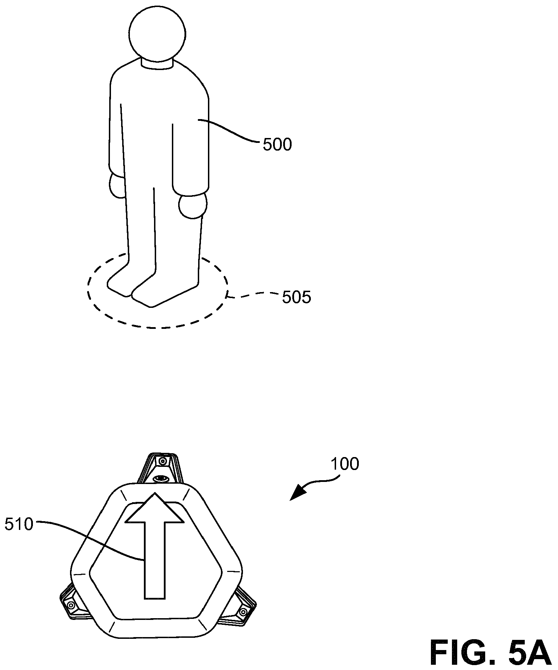

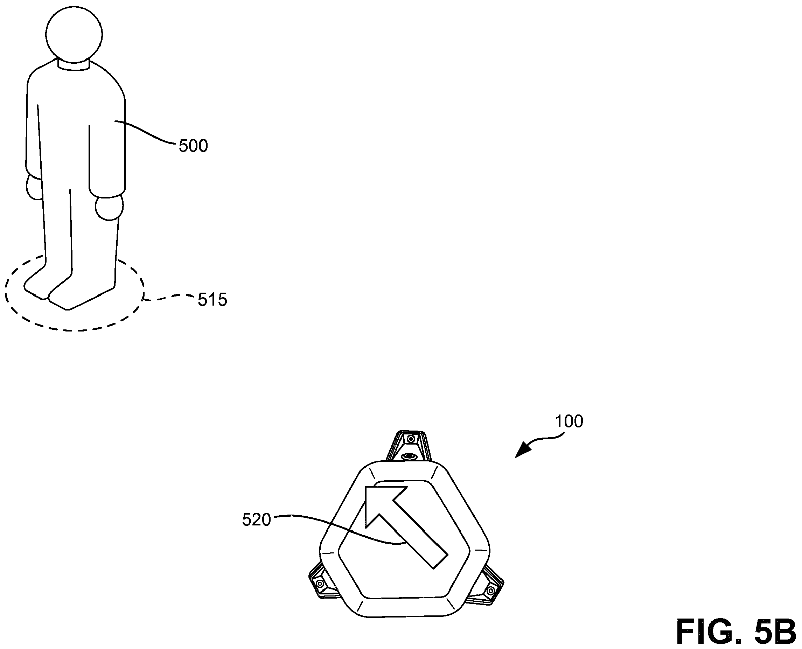

FIGS. 5A & 5B illustrate a general operation of system 100 according to some embodiments. As illustrated in FIG. 5A, the object 500 is initially located at a first position 505. Thus, the platform 110 is directed (illustrated by arrow 510) toward the first position 505.

As illustrated in FIG. 5B, the object 500 has moved from a first position 505 to a second position 515. The sensor 115, in conjunction with controller 405, senses movement of the object 500 from the first position 505 to the second position 515. The controller 405 controls the actuator 205 to move the platform 110 in a direction (illustrated by arrow 520) toward the second position 515.

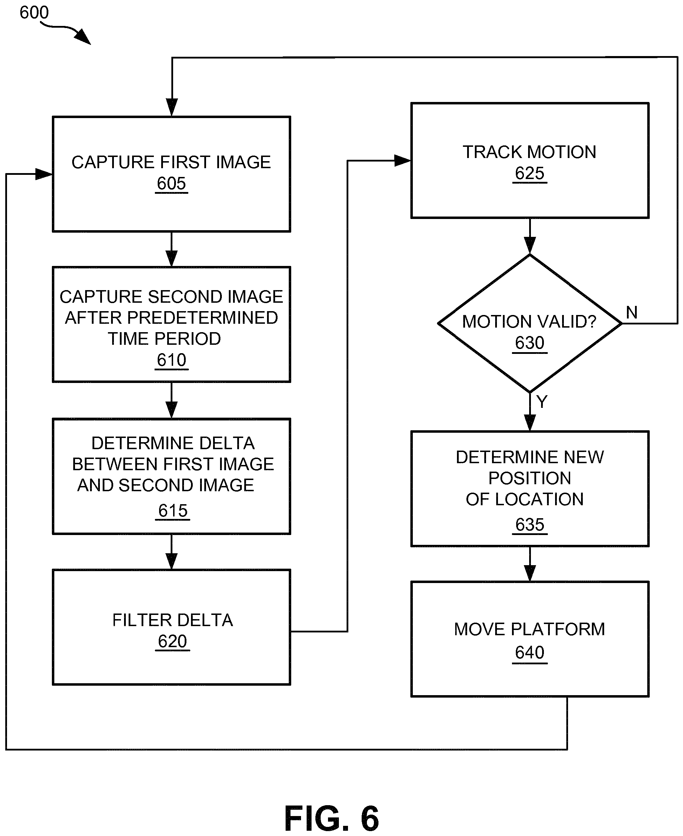

FIG. 6 is a flowchart illustrating a process, or operation, 600 of the system 100 according to some embodiments. It should be understood that the order of the steps disclosed in process 600 could vary. Furthermore, additional steps may be added to the process and not all of the steps may be required. A first image, or frame, is captured by sensor 115 (block 605). A second image, or frame, is captured by sensor 115 at a predetermined time after capture of the first image (block 610). The controller 405 determines, or calculates a delta, or difference, between the first image and the second image (block 615). In some embodiments, the controller 405 determines a delta image between the first image and second image by analyzing individual pixels of the first image and the second image. In such an embodiment, pixels which are static indicate no motion, while pixels having a change (for example, a change in brightness level) indicate motion. For example, a delta image may be determined by subtracting each pixel of the second image from each pixel of the first image. This results in a delta image in which pixels having no change between the first image and the second image appear as black (or approximately 0% brightness level), while pixels having change between the first image and the second image appear as white (or approximately 100% brightness level).

The controller 405 may then filter the delta image (block 620). In some embodiments, the controller 405 filters the delta image by applying contour detection to the pixels indicating motion (for example, the pixels illustrated as white). In such an embodiment, the contour detection finds one or more outlines of one or more pixel groups that indicate motion, while filtering out small irrelevant contours. In some embodiments, filtering the delta image may also include excluding changes in light (for example, changes in daylight due to cloud coverage) from the delta image. In such an embodiment, the controller 405 may exclude light from the delta image by removing areas (for example, an area of pixels) that have brightness over a predetermined threshold. In such an embodiment, the predetermined threshold may be a calculated average brightness of the first and/or second images. In another embodiment, the controller 405 may exclude light from the delta image by first determining movement of light and excluding that movement from the delta image. In another embodiment, the controller 405 may exclude light, or the movement of light, from the delta image by selectively filtering, and/or removing areas of, the delta image that are suspected to contain movements caused by light or other extraneous artifacts. The area of the delta image to filter and/or exclude, along with the filter parameters, may be calculated by determining vector(s) of motion for one or more objects 500 in the present delta image, along with previously determined vector(s) of motion from previous delta images. In some embodiments, the data may not be filtered.

Motion of the object 500 is then tracked (block 625). In some embodiments, motion of the object 500 is tracked by finding the largest contour in the delta image. A rectangle may then be created around the largest contour in the delta image. The area of the rectangle may be measured and compared to previous measurements (for example, previous area measurements of rectangles corresponding to the object 500 from previous operations) to determine that the same object 500 is being tracked over time. The center point of the rectangle may then be determined. Motion may then be tracked by comparing a change of the center point from previous operations. In some embodiments, various delta image characteristics (for example, rectangle areas and center point locations) from previous operations may be stored in memory 430 of control system 400.

The controller 405 next determines if the motion is valid (block 630). In some embodiments, the motion is determined to be found valid by comparing the area and location (for example, location of the center point) of the rectangle from the current operation to previous operations. For example, if the area is not approximately the same between the current delta image and previous delta images, or if the second location is over a predetermined distance away from the first location, then the motion may be determined to be invalid. If the motion is invalid, operation 600 cycles back to block 605.

If the motion is found to be valid, the controller 405 determines the new position of the object 500 (for example, based on the center point of the rectangle) (block 635). The controller 405 then controls the actuator 205 to move the platform 110 in the direction of the position of the object 500 (block 640). Operation 600 then cycles back to block 605.

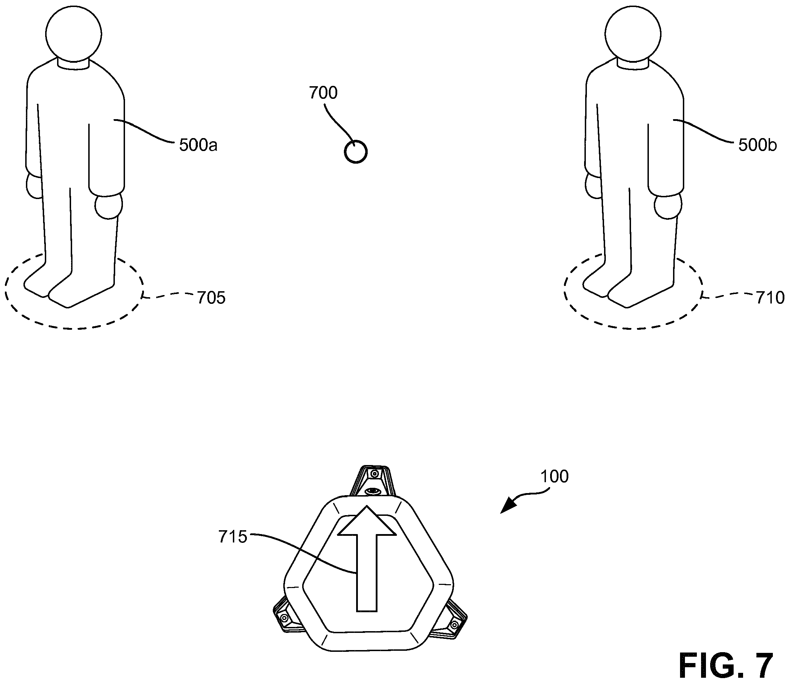

FIG. 7 illustrates another operation of the system 100 according to some embodiments. In such an embodiment, the system 100 is configured to track two or more objects 500a, 500b. In one embodiment of operation, the system 100 determines a weighted location 700 between a first location 705 of the first object 500a and a second location 710 of the second object 500b and directs the platform 110 in the direction (illustrated by arrow 715) of the weighted location 700.

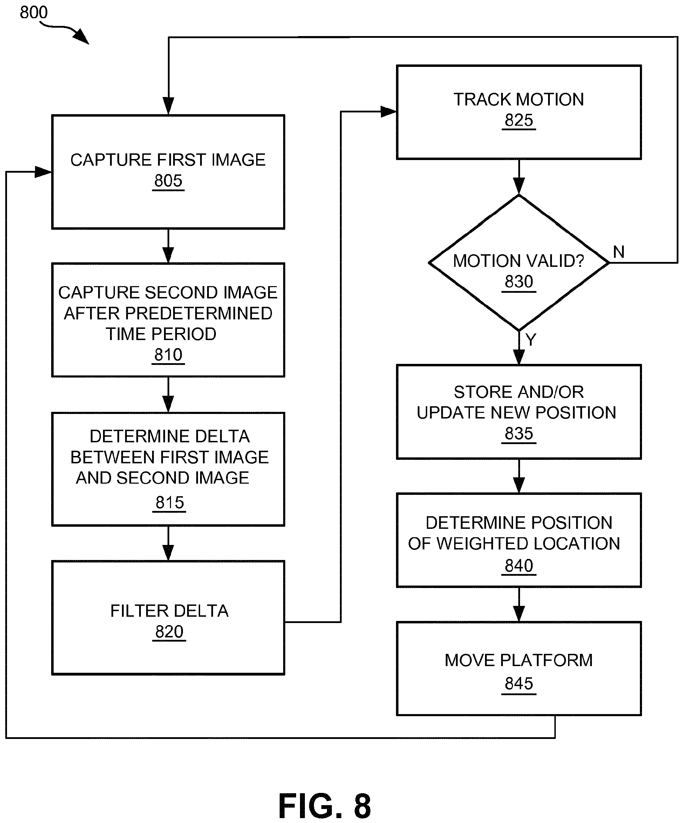

FIG. 8 is a flowchart illustrating a process, or operation, 800 of the system 100 according to some embodiments. It should be understood that the order of the steps disclosed in process 800 could vary. Furthermore, additional steps may be added to the process and not all of the steps may be required. A first image, or frame, is captured by sensor 115 (block 805). A second image, or frame, is captured by sensor 115 at a predetermined time after capture of the first image (block 810). The controller 405 determines, or calculates, a delta, or difference, between the first image and the second image (block 815). In some embodiments, the controller 405 determines a delta image between the first image and second image by analyzing individual pixels of the first image and the second image. In such an embodiment, pixels that are static indicate no motion, while pixels having a change (for example, a change in brightness level) indicate motion. For example, a delta image may be determined by subtracting each pixel of the second image from each pixel of the first image. This results in a delta image in which pixels having no change between the first image and the second image appear as black (or approximately 0% brightness level), while pixels having change between the first image and the second image appear as white (or approximately 100% brightness level).

The controller 405 may then filter the delta image (block 820). In some embodiments, the controller 405 filters the delta image by applying contour detection to the pixels indicating motion (for example, the pixels illustrated as white). In such an embodiment, the contour detection finds one or more outlines of one or more pixel groups that indicate motion, while filtering out small irrelevant contours. In some embodiments, filtering the delta image may also include excluding changes in light (for example, changes in daylight due to cloud coverage) from the delta image. In such an embodiment, the controller 405 may exclude light from the delta image by removing areas (for example, an area of pixels) that have brightness over a predetermined threshold. In such an embodiment, the predetermined threshold may be a calculated average brightness of the first and/or second images. In another embodiment, the controller 405 may exclude light from the delta image by first determining movement of light and excluding that movement from the delta image. In some embodiments, the data may not be filtered.

Motion of one or more objects 500 (for example, objects 500a, 500b of FIG. 7) may then be tracked (block 825). In some embodiments, motion of the objects 500 are tracked by finding the largest contours in the delta image. Rectangle may then be created around the largest contours in the delta image. The area of the rectangles may be measured and compared to previous measurements (for example, previous area measurements of rectangles corresponding to the object 500 from previous operations) to determine that the same objects 500 being tracked over time. The center points of the rectangles may then be determined. Motion (of the one or more objects) may then be tracked by comparing changes of the center points from the first image to the second image. In some embodiments, various delta image characteristics (for example, rectangle areas and center point locations) from previous operations may be stored in memory 430 of control system 400.

Additionally, in some embodiments, motion of the objects 500 being tracked includes determining if an object (for example, objects 500a, 500b of FIG. 7) have moved and/or if a new object 500 has been sensed by sensor 115. In such an embodiment, the controller 405 may also check for any overlapping objects 500 (for example, two or more objects that are in such a proximate location to each other to be determined in the same position).

The controller 405 next determines if the motion (for example, motion of objects 500a, 500b and/or motion of a new object 500) is valid (block 830). In some embodiments, the motion is determined to be found valid by comparing the area and location (for example, location of the center point) of the rectangles from the current operation to previous operations. For example, if the area is not approximately the same between the current delta image and preivous delta images, or if the second location is over a predetermined distance away from the first location, then the motion may be determined to be invalid. If the motion is invalid, operation 800 cycles back to block 805.

If motion is valid, the new position of the objects 500 are stored and/or updated in memory 430 (block 835). A weighted location 700 of the objects 500 may then be determined (block 840). In some embodiments, the weighted location 700 is weighted based on one or more factors, including: area of rectangle(s) around the one or more object 500, distance from system 100 to the one or more object 500, an aspect ratio of the rectangle(s) around the one or more object 500 (for example, a change in aspect ratio), frequency of motion of the one or more object 500, distance of motion of the one or more object 500 (for example, relatively small movements (such as painting a wall) versus relatively large movements (such as sweeping a floor)), and speed of motion of the one or more objects 500.

In other embodiments, the weighted location 700 is determined by determining a midpoint between the center point of the first object 500a and the center point of the second object 500b. The controller 405 then controls the actuator 205 to move the platform 110 in the direction of the weighted location 700 (block 845). Operation 800 then cycles back to block 805.

Thus, the application provides, among other things, an object tracking system and method of tracking an object. Various features and advantages of the application are set forth in the following claims.

## Claims

1. An object tracking system comprising:
a base;
a platform rotatably coupled to the base via an actuator, the platform configured to receive an accessory device;
a sensor configured to sense movement of the object; and
a controller having a memory and an electronic processor, the controller configured to receive, via the sensor, data indicative of movement of the object; and control the actuator based on the data indicative of movement of the object.

2. The object tracking system of claim 1, wherein the accessory device is at least one selected from a group consisting of a light source, a fan, a camera, a smartphone, a tablet, an accessory device removably received by the platform.

3. The object tracking system of any preceding claim, wherein the base further includes a battery receptacle configured to receive a rechargeable battery pack.

4. The object tracking system of claim 3, wherein the actuator receives power from the rechargeable battery pack, or
wherein the accessory device receives power from the rechargeable battery pack.

5. The object tracking system of any preceding claim, wherein the controller is further configured to
determine if movement of the object is valid, and
control the actuator based on a determination that movement of the object is valid, or
wherein the controller is further configured to receive, via the sensor, data indicative of movement of a second object.

6. The object tracking system of claim 5, wherein the controller is further configured to
determine, based on the data indicative of movement of the object and data indicative of movement of the second object, a weighted location between the object and second object; and
control the actuator in a direction toward the weighted location.

7. The object tracking system of claim 6, wherein the weighted location is determined at least partially based on at least one selected from a group consisting of:
a first size of the object and a second size of the second object,
a first distance of the object from the base and a second distance of the second object from the base,
a first frequency of motion of the object and a second frequency of motion of the second object,
a first distance of motion of the object and a second distance of motion of the second object, and
a first speed of motion of the object and a second speed of motion of the second object.

8. A method of operating an object tracking apparatus, the object tracking apparatus including a base and a platform rotatably coupled to the base via an actuator, the method comprising:
sensing, via a sensor, a first image of an object at a first time;
sensing, via the sensor, a second image of the object at a second time;
receiving, via a controller, the first image and the second image;
determining, via the controller, a delta between the first image and the second image;
determining, via the controller, motion of the object based on the delta;
determining, via the controller, if the motion of the object is valid;
determining, via the controller, a position of the object based on the motion when the motion is valid; and
controlling, via the controller, the actuator to move the platform in a direction of the position.

9. The method of claim 8, further comprising:
receiving, via the platform, an accessory device.

10. The method of claim 9, wherein the accessory device is at least one selected from a group consisting of a light source, a fan, a camera, a smartphone, and a tablet.

11. The method of any of claims 8 to 10, further comprising:
receiving, via a battery receptacle of the base, a rechargeable battery pack.

12. The method of claim 11, wherein the actuator receives power from the rechargeable battery pack, or
wherein an accessory device releasably coupled to the platform receives power from the rechargeable battery pack.

13. The method of any of claims 8 to 12, further comprising
sensing, via the sensor, a third image of a second object at the first time;
sensing, via the sensor, a fourth image of the second object at the second time;
receiving, via the controller, the third image and the fourth image;
determining, via the controller, a second delta between the third image and the fourth image;
determining, via the controller, a second motion of the second object based on the second delta;
determining, via the controller, if the second motion of the object is valid;
determining, via the controller, a second position of the second object based on the second motion when the second motion is valid;
determining, via the controller, a weighted location based on the position and the second position; and
controlling, via the controller, the actuator to move the platform in a direction of the weight position.

14. The method of claim 13, wherein the weighted location is determined at least partially based on at least one selected from a group consisting of:
a first size of the object and a second size of the second object,
a first distance of the object from the base and a second distance of the second object from the base,
a first frequency of motion of the object and a second frequency of motion of the second object,
a first distance of motion of the object and a second distance of motion of the second object, and
a first speed of motion of the object and a second speed of motion of the second object.

15. The method of any of claims 8 to 14, wherein the step of determining, via the controller, if the motion of the object is valid includes comparing a first area of the object in the first image to a second area of the object in the second image, or
wherein the step of determining, via the controller, if the motion of the object is valid includes comparing a first location of the object in the first image to a second location of the object in the second image.
